# EUROPÄISCHE PATENTSCHRIFT

(11) **EP 2 746 803 B1**
(45) Veröffentlichungstag und Bekanntmachung des Hinweises auf die Patenterteilung: **19.09.2018**
(21) Anmeldenummer: 13196805.9
(22) Anmeldetag: 12.12.2013
(51) Int. Cl.: G01S 13/58, G01S 13/91, G01S 13/42, G08G 1/04

(54) **VERFAHREN UND ANORDNUNG ZUR ERFASSUNG VON VERKEHRSVERSTÖSSEN IN EINEM AMPELBEREICH DURCH HECKANMESSUNG MIT EINEM RADARGERÄT**
METHOD AND ASSEMBLY FOR DETECTING TRAFFIC OFFENCES IN AN AREA WITH TRAFFIC LIGHTS BY MEASURING THE REAR OF VEHICLES USING A RADAR DEVICE
PROCÉDÉ ET SYSTÈME D'ENREGISTREMENT D'EMBOUTEILLAGES DANS UNE ZONE DE FEUX DE SIGNALISATION PAR LE RELEVÉ DES PARTIES ARRIÈRES À L'AIDE D'UN RADAR

(30) Priorität: 20.12.2012 DE 102012112754
(43) Veröffentlichungstag der Anmeldung: 25.06.2014
(73) Patentinhaber: Jenoptik Robot GmbH, 40789 Monheim (DE)
(72) Erfinder: Lehning, Michael, 31137 Hildesheim (DE)
(74) Vertreter: Waldauf, Alexander

(56) Entgegenhaltungen:
- EP-A1- 2 048 515
- DE-A1-102010 010 656
- US-A1- 2011 187 580

## Beschreibung

Die Erfindung betrifft ein Verfahren zur Überwachung eines Verkehrsraumes zwecks Erfassung von Verkehrsverstößen in einem Ampelbereich, das heißt einem Bereich der durch Haltelinien begrenzt ist und dessen Befahren durch die Schaltung einer Verkehrslichtsignalanlage gestattet oder untersagt ist. Ein solches Verfahren ist gattungsgemäß aus der EP 2 048 515 A1 bekannt.

Generell unterscheiden sich die bekannten Verfahren zur Überwachung von Verkehrsräumen durch die Verwendung unterschiedlicher Arten von Sensoren, die entweder in den Fahrbahnbelag eingebettet (invasive Sensoren) oder oberhalb des Fahrbahnbelages (nicht-invasive Sensoren) angeordnet werden. Die invasiven Sensoren erfordern einen hohen Installationsaufwand und müssen entsprechend dem Verschleiß des Fahrbahnbelages von Zeit zu Zeit ausgetauscht werden. Sie sind außerdem nur für stationäre Anordnungen geeignet. Der damit überwachte Verkehrsraum wird durch die Anordnung der eingebetteten Sensoren begrenzt.

Anstatt in jeden einzelnen Fahrstreifen, der aus mehreren Fahrstreifen bestehenden Fahrbahn, an jeweils einem vorbestimmten Ort einen Sensor einzubetten, wird gemäß der EP 2 048 515 A1 eine Radarstrahlung im Wesentlichen horizontal zur Fahrbahn und längs zum Fahrbahnrand über alle Fahrstreifen der Fahrbahn gerichtet. Dazu wird ein winkelauflösendes Radargerät (FMCW-Radargerät), zum Senden und Empfangen von Radarstrahlung, so zur Fahrbahn positioniert, dass es eine eine Radarkeule bildende Radarstrahlung mit einem Öffnungswinkel von 20° bis 40°, unter einem horizontalen Aufstellwinkel der Radarstrahlungsachse (Symmetrielinie der Radarkeule) zum Fahrbahnrand von kleiner 45° aussendet. Das Radargerät kann sowohl so angeordnet sein, dass die Fahrzeuge beim Durchfahren der Radarkeule auf das Radargerät zu fahren (zufließender Verkehr - frontmessendes Radargerät) oder sich von dem Radargerät entfernen (abfließender Verkehr - heckmessendes Radargerät). Der überwachte Verkehrsraum wird dabei in seiner Lage und Größe durch die Lage der Radarstrahlungsachse und den Öffnungswinkel der Radarkeule bestimmt.

Gemäß der vorgenannten EP 2 048 515 A1 werden aus den an einem Fahrzeug während der Durchfahrt durch die Radarkeule reflektierten Radarsignalen die sich über die Messdauer ändernde relative Position des Fahrzeuges zum Radargerät abgeleitet. In Kenntnis der Relativlage der Haltelinie zum Radargerät lässt sich dann mit Hilfe der relativen Position des Fahrzeuges zum Radargerät dessen senkrechter Abstand zur Haltelinie ermitteln. Aus der ebenfalls abgeleiteten Geschwindigkeit für das betreffende Fahrzeug und dessen senkrechtem Abstand zur Haltelinie, kann anschließend auf den Zeitpunkt des Passierens der Haltelinie geschlossen werden und es wird ein Foto ausgelöst, wenn dieser Zeitpunkt außerhalb der Grünphase einer der Haltelinie zugeordneten Verkehrslichtsignalanlage liegt.

Die eine jedem Messzeitpunkt zugeordnete Position des Fahrzeuges wird hier durch die Position eines sogenannten Auftreffpunktes erklärt, für den aus den Reflexionssignalen eine Entfernung und ein Winkel ermittelt wird.

Für den ankommenden Verkehr, für den mit zunehmender Nähe zur Haltelinie nur noch die Fahrzeugfront im Reflexionsbereich der Radarstrahlung liegt, ist mit dem vorgenannten Verfahren eine zuverlässige Erfassung von Verkehrsverstößen an einer Verkehrslichtsignalanlage möglich, da die Fahrzeugfront, die naturgemäß als erstes die Haltelinie passiert, die Position des sogenannten Auftreffpunktes im Wesentlichen bestimmt.

Für den abfließenden Verkehr, für den mit zunehmender Nähe zur Haltelinie nur noch das Fahrzeugheck im Reflexionsbereich der Radarstrahlung liegt und damit das Fahrzeugheck die Position des sogenannten Auftreffpunktes im Wesentlichen bestimmt, werden die Verkehrsverstöße nicht erfasst, bei denen zwar die Fahrzeugfront, nicht aber bereits das Fahrzeugheck die Haltelinie zu einem Zeitpunkt, abhängig vom einem vorgegebenen Schaltzustand der Verkehrslichtsignalanlage, passiert.

Aus der nachveröffentlichten DE 10 2012 107 444 B3 ist ein Verfahren bekannt, bei dem Fahrzeuge beim Durchfahren einer Radarkeule mehrfach angemessen werden und Messzeitpunkten zugeordnet spezifische Positionsgrößen gebildet werden. Eine spezifische Positionsgröße kann eine spezifische Radialentfernung oder ein spezifischer Objektwinkel sein. Deren zeitliche Änderung wird über die Länge eines Abschnitts auf das Auftreten einer Unstetigkeit untersucht. Die Länge des Abschnitts ist abhängig von der Länge des Fahrzeugs und erlaubt eine Klassifizierung.

Die US 2011/0187580 A1 betrifft eine Vorrichtung zur Erfassung eines Fahrzeugs, insbesondere eines Flugzeugs, auf einer Fahrbahn, beispielsweise auf einer Landebahn. Die Vorrichtung sendet Mikrowellen in zwei Radarkeulen in einen Beobachtungsraum, wobei die Radarkeulen horizontal und quer zur Fahrbahn gerichtet sind. Als vorteilhaft wird beschrieben, dass eine Nutzung zweier Radarkeulen, die zudem vorzugsweise unter verschiedenen Winkeln in den Beobachtungsraum gerichtet sind, eine geringere Störanfälligkeit bewirkt.

Aus der DE 10 2010 010656 A1 ist eine Radar-Geschwindigkeitsmesseinrichtung bekannt mit zwei an einem Rand einer Fahrbahn aufstellbaren Messmodulen mittels denen ein Klassifizierungsverfahren durchgeführt werden kann. Mit den beiden Modulen werden jeweils die Abstände der Fahrzeugachsen zur vorderen bzw. hinteren Ecke des Fahrzeuges ermittelt. Die Messwerte werden miteinander korreliert und die Fahrzeuglänge ermittelt.

Es ist die Aufgabe der Erfindung ein Verfahren zu finden, mit der/dem mit einem heckmessenden Radargerät eine verbesserte Prognose für das Überfahren der Fahrzeugfront eines Fahrzeuges über eine Haltelinie gegeben werden kann.

Diese Aufgabe wird für ein Verfahren zur Erfassung von Verkehrsverstößen durch Fahrzeuge in einem Ampelbereich durch Heckanmessung der Fahrzeuge bei dem während des Durchfahrens eines durch Radarstrahlung überdeckten Beobachtungsraumes, zu mehreren Messzeitpunkten aus Messsignalen, die durch Reflexion von einem der Fahrzeuge verursacht sind, jeweils eine messzeitpunktabhängige, spezifische Positionsgröße sowie die Fahrzeuggeschwindigkeit des Fahrzeuges abgeleitet werden und mit Hilfe der sich über die Durchfahrt ändernden spezifischen Positionsgröße und der Fahrzeuggeschwindigkeit ermittelt wird, ob das Fahrzeug außerhalb einer Grünphase einer Verkehrslichtsignalanlage eine innerhalb des Beobachtungsraumes liegende, der Verkehrslichtsignalanlage zugeordneten Haltelinie überfahren wird, um gegebenenfalls eine Kamera zur Herstellung wenigstens eines Beweisfotos wenigstens einmal auszulösen, gelöst.

Es ist erfindungswesentlich, dass hierzu ein FMCW-Radargerät, mit wenigstens einem Radarsensor, welches Radarstrahlung mit einem Öffnungswinkel zwischen zwei äußeren Randstrahlen aussendet und innerhalb einer Messdauer zu mehreren Messzeitpunkten eine Vielzahl von Messsignalen empfängt, wobei pro Messzeitpunkt eine Radialgeschwindigkeit und als Positionsgröße eine Radialentfernung und ein spezifischer Objektwinkel ableitbar sind, neben einer Fahrbahn, mit einem Fahrbahnrand, so positioniert und ausgerichtet wird, dass der Beobachtungsraum die Haltelinie vollständig abdeckt und der erste der beiden Randstrahlen mit einem in Fahrtrichtung verlaufenden Abschnitt des Fahrbahnrandes einen horizontalen, stumpfen Winkel einschließt.
Aus den spezifischen Positionsgrößen wird die Fahrzeuglänge abgeleitet und zu der spezifischen Radialentfernung, welche mit Annäherung an die Haltelinie zunehmend nur noch von der Position des Fahrzeughecks des Fahrzeuges bestimmt wird, addiert.
Eine so gebildete korrigierte spezifische Radialentfernung r_{corr} wird dann zur Ermittlung der Überfahrt der Haltelinie verwendet, womit trotz Heckmessung die Überfahrt der Fahrzeugfront des Fahrzeuges prognostiziert wird.

Die spezifischen Positionsgrößen werden als Funktion über eine die Messzeitpunkte umfassende Messdauer abgespeichert. Die Funktion weist mehrere Abschnitte auf, in denen die Positionsgrößen aus Messsignalen abgeleitet werden, die von unterschiedlichen Oberflächen in sich ändernder Relativlage zur Radarstrahlung verursacht werden. Über einen ersten Abschnitt erfolgt eine Reflexion nur an der Fahrzeugfront, über einen zweiten Abschnitt an der Fahrzeugfront und zunehmend an einer Fahrzeugflanke, über einen dritten Abschnitt nur an der Fahrzeugflanke, über einen vierten Abschnitt an der Fahrzeugflanke und dem Fahrzeugheck und über einen fünften Abschnitt nur an dem Fahrzeugheck. Es werden die Übergänge zwischen dem zweiten Abschnitt und dem dritten Abschnitt sowie dem dritten Abschnitt und dem vierten Abschnitt erfasst, die Länge des dritten Abschnittes bestimmt wird und aus der Länge des dritten Abschnittes mit Hilfe der ermittelten Fahrzeuggeschwindigkeit die Fahrzeuglänge des Fahrzeuges berechnet.

Alternativ kann vorteilhaft aus den spezifischen Positionsgrößen ein Fahrzeugmodel moduliert werden, welches nach Normierung mit Hilfe der ermittelten Fahrzeuggeschwindigkeit mit vorhandenen Vergleichsmodellen, deren Fahrzeuglänge bekannt ist, verglichen wird und durch Zuordnung des modellierten Fahrzeugmodels zu dem ähnlichsten Vergleichsmodel wird die Fahrzeuglänge abgeleitet.

Die spezifische Positionsgröße pro Messzeitpunkt kann vorteilhaft durch Berechnung eines spezifischen Wertes der diesem Messzeitpunkt zugeordneten Radialentfernungen gebildet werden.

Alternativ kann die spezifische Positionsgröße pro Messzeitpunkt vorteilhaft durch Berechnung eines spezifischen Wertes der diesem Messzeitpunkt zugeordneten Objektwinkel gebildet werden.

Der spezifische Wert kann vorteilhaft durch Bildung des arithmetischen Mittelwertes dargestellt werden.

Nachfolgend soll die Erfindung anhand von Ausführungsbeispielen näher erläutert werden. In den zugehörigen Zeichnungen zeigen:
- Fig. 1: eine schematische Darstellung einer Vorrichtung, bei dem der Beobachtungsraum durch Radarstrahlung von einem Radarsensor kommend abgedeckt wird,
- Fig. 2a: den prinzipiellen Ablauf der Erfassung von Rohzielen an einem sich durch den Beobachtungsraum bewegenden Fahrzeug,
- Fig. 2b: ein Entfernungs-Zeit-Diagramm,
- Fig. 2c: ein Objektwinkel-Zeit-Diagramm und
- Fig. 3: Prinzipskizze für eine Vorrichtung bei dem der Beobachtungsraum durch Radarstrahlung von zwei Radarsensoren kommend abgedeckt wird.

Für das Verfahren zur Erfassung von Verkehrsverstößen in einem Ampelbereich, verursacht durch ein oder auch mehrere sich auf einer Fahrbahn 2 fortbewegenden Fahrzeuge 6, wird ein aus dem Stand der Technik bekanntes FMCW-Radargerät 1 (FMCW = Frequency Modulation Continious Wave), vorteilhaft ein FSK-Radargerät (FSK = Frequency Shift Keying), eine Sonderform eines FMCW-Radargerätes 1 verwendet, mit dem gleichzeitig mehrere der Fahrzeuge 6 erfasst und auch verfolgt (Tracking) werden können. Das FSK-Radargerät sendet mittels wenigstens einem Radarsensor 7 eine Radarstrahlung 11 auf mindestens zwei alternierenden Trägerfrequenzen aus bzw. nimmt von den erfassten Fahrzeugen 6 durch Reflexion verursachte Messsignale (Dopplersignale), der mindestens zwei alternierenden Trägerfrequenzen, wieder auf. Durch die Auswertung von Frequenzverschiebungen zwischen und innerhalb der mindestens zwei von den Fahrzeugen 6 reflektierten Trägerfrequenzen mittels einer vom FMCW-Radargerät 1 umfassten Signalverarbeitungseinheit 10, wird innerhalb einer kurzen Messdauer eine gute Auflösung zwischen mehreren der Fahrzeuge 6 entsprechend deren Radialentfernungen und Objektwinkel (kartesische Entfernungskoordinaten) sowie Radialgeschwindigkeiten gegenüber dem FMCW-Radargerät 1 ermöglicht.

Die von dem FMCW-Radargerät 1 ausgehende Radarstrahlung 11 wird von zwei äußeren Randstrahlen 16, 17 begrenzt, die einen Öffnungswinkel γ miteinander einschließen. Die Winkelhalbierende des Öffnungswinkels γ stellt die Radarachse 12 dar.

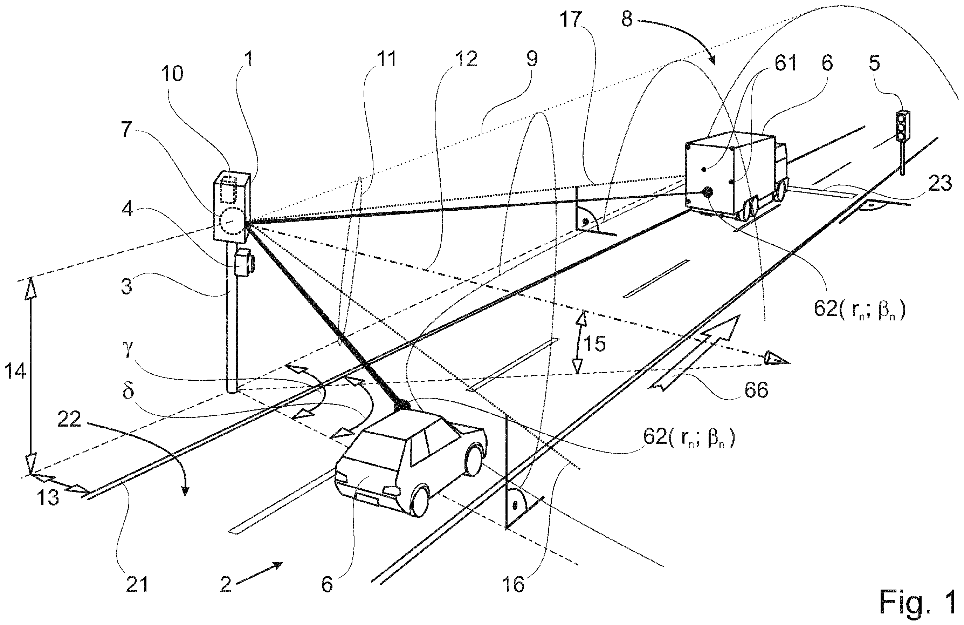

Gemäß einer Vorrichtung , wie in Fig. 1 dargestellt, umfasst das FMCW-Radargerät 1 genau einen Radarsensor 7 und die Radarstrahlung 11 bildet eine von diesem einen Radarsensor 7 ausgesendete Radarkeule 9, deren Randstrahlen einen ersten der äußeren Randstrahlen 16 und einen zweiten der äußeren Randstrahlen 17 bilden.

Zur Durchführung des erfindungsgemäßen Verfahrens ist es grundsätzlich erforderlich, die Position und Ausrichtung des FMCW-Radargeräts 1 gegenüber der Fahrbahn 2 und einer sich darauf befindenden Haltelinie 23 zu kennen. Insbesondere muss der horizontale, senkrechte Abstand der Haltelinie zum FMCW-Radargerät 18 bekannt sein. Diese Kenntnis kann auch durch das Anlernen des FMCW-Radargerätes 1 unmittelbar vor der Durchführung des Verfahrens erlangt werden.

Zur Erläuterung von möglichen Positionierungen und Ausrichtungen, die das FMCW-Radargerät 1 gegenüber der Fahrbahn 2 einnehmen kann, ist in **Fig. 1** eine praxisrelevante Aufstellung des FMCW-Radargeräts 1 dargestellt.

Das FMCW-Radargerät 1 ist neben der Fahrbahn 2 mit einem horizontalen, senkrechten Aufstellabstand 13 zu einem Fahrbahnrand 21 und in einer Höhe mit einem vertikalen, senkrechten Aufstellabstand 14 zu einer Fahrbahnoberfläche 22 an einem Mast 3 montiert angeordnet. Die horizontale Ausrichtung des FMCW-Radargeräts 1 erfolgt so, dass die Radarstrahlung 11 im Wesentlichen in Fahrtrichtung 66 der auf der Fahrbahn 2 fahrenden Fahrzeuge 6 abgestrahlt wird und einen Beobachtungsraum 8 oberhalb der Fahrbahn 2 überdeckt, der die auf der Fahrbahn 2 vorhandene Haltelinie 23 einschließt und einen Bereich der Fahrbahn 2 abdeckt, indem die Fahrzeuge 6 auf die Haltelinie 23 zufahren. Dabei schließt der erste äußere Randstrahl 16 horizontal einen stumpfen Winkel δ mit einem Abschnitt des Fahrbahnrandes 21 ein, der in Abstrahlrichtung des FMCW-Radargerätes 1 verläuft. Die vertikale Ausrichtung des FMCW-Radargerätes 1 wird mit einem vertikalen Winkel 15 beschrieben, den die Radarachse 12 mit der Fahrbahnoberfläche 22 einschließt. Der zweite äußere Randstrahl 17 schließt in Abhängigkeit vom horizontalen, senkrechten Aufstellabstand 13 mit dem Fahrbahnrand 21 einen spitzen Winkel ein, sodass die Haltelinie 23 im Beobachtungsraum 8 liegt. Bei einem horizontalen, senkrechten Aufstellabstand 13 von nahezu Null kann der spitze Winkel in eine Parallelität zum Fahrbahnrand 21 übergehen.

Aus der Position und Ausrichtung des FMCW-Radargeräts 1 und aus der Ermittlung von, aus den Messsignalen erzeugten, unmittelbar ableitbaren Messgrößen (Radialgeschwindigkeit, Radialentfernung und Objektwinkel), können dann weitere Merkmale für ein erfasstes Fahrzeug 6, wie ein Fahrzeugwinkel a, eine Fahrspur, eine Fahrzeugbeschleunigung und eine Fahrzeuggeschwindigkeit, handeln abgeleitet werden.

Die Fahrspur beschreibt dabei zu jedem Messzeitpunkt tₙ die tatsächliche Fortbewegungsrichtung des Fahrzeugs 6 auf der Fahrbahn 2, die nicht mit der Richtung der Radialentfernung zum FMCW-Radargerät 1 übereinstimmt und außerdem, z. B. durch einen Fahrspurwechsel des Fahrzeugs 6, nicht zwingend dem Richtungsverlauf der Fahrbahn 2 und der hierfür generell festgelegten Fahrtrichtung 66 entsprechen muss, die parallel zum Fahrbahnrand 21 verläuft.

Aus der Fahrspur kann gleichzeitig auf den Fahrzeugwinkel a geschlossen werden, den das Fahrzeug 6 zu den einzelnen Messzeitpunkten tₙ jeweils mit seiner Längsachse, in der Fahrtrichtung 66 betrachtet, mit der Richtung der radialen Entfernung zum FMCW-Radargerät 1 einschließt.

Die Fahrzeuggeschwindigkeit ist die tatsächliche Geschwindigkeit des Fahrzeugs 6, mit der es sich auf der Fahrbahn 2 fortbewegt.

Wird, zur vereinfachten Erläuterung der Erfindung, die von einem Fahrzeug 6 kommenden Messsignale auf die Reflexion an einem einzigen, punktförmigen Reflektors zurückgeführt, entspricht die Radialentfernung dem direkten Abstand des punktförmigen Reflektors zum Mittelpunkt der die Radarstrahlung 11 abgebenden Radarsensors 7 des FMCW-Radargeräts 1, durch den auch die Radarachse 12 der Radarkeule 9 verläuft. Die Radialentfernung kann unmittelbar aus einer gemessenen Phasenverschiebung zwischen den Reflexionssignalen der mindestens zwei verwendeten Trägerfrequenzen des FMCW-Radargerätes 1 abgeleitet werden. Da das FMCW-Radargerät 1 außerhalb der Fahrbahn 2, winklig zum Fahrbahnrand 21 und zur Oberfläche der Fahrbahn 2 angeordnet ist, ist die Radialgeschwindigkeit nur die Geschwindigkeitskomponente der realen Fahrzeuggeschwindigkeit, die durch die direkt in Richtung des FMCW-Radargerätes 1 ausgeführte Annäherung des punktförmigen Reflektors (in Richtung der Radialentfernung) erfasst wird.

Als Objektwinkel soll hier der Winkel bezeichnet werden, der im Mittelpunkt des die Radarstrahlung 11 abgebenden Radarsensors 7 des FMCW-Radargeräts 1 zwischen der Radarachse 12 der Radarkeule 9 und der direkten Verbindung zwischen dem punktförmigen Reflektor und dem Mittelpunkt des Radarsensors 7 (Richtung der Radialentfernung) aufgespannt wird. Es ist dem Fachmann klar, dass es sich hier um eine Vereinfachung handelt, um durch die Einführung einer Achse einer winkelauflösenden Empfängereinheit, die parallel und vernachlässigbar nahe zur Radarachse 12 verläuft, die Beschreibung der Erfindung nicht unnötig zu verkomplizieren.

Neben dem FMCW-Radargerät 1 gehört wenigstens eine Kamera 4 zu der Vorrichtung, die vorteilhaft gemeinsam mit dem FMCW-Radargerät 1 vertikal übereinander auf dem Mast 3 angeordnet ist.

Zur Vorbereitung der Erfassung von Verkehrsverstößen wird das FMCW-Radargerät 1 so zur Fahrbahn 2 positioniert, dass sich die Fahrzeuge 6 durch die Radarkeule 9 hindurch bewegen und Messsignale, die durch Reflektion an mit Radarstrahlung 11 beaufschlagten und die Radarstrahlung 11 reflektierenden Oberflächen der Fahrzeuge 6 auftreten, erfasst werden können. Die reflektierenden Oberflächen der Fahrzeuge 6 können als eine Vielzahl von Minireflektoren verstanden werden. Die Minireflektoren sind kleinste Oberflächenabschnitte des Fahrzeugs 6, deren Oberflächenausdehnung und Oberflächenausrichtung gegenüber der Radarstrahlung 11 ein Messsignal erzeugen können. Ein für eine Detektion hinreichend intensives Messsignal wird an Oberflächenabschnitten des Fahrzeugs 6 auftreten, in denen eine Vielzahl dieser Minireflektoren räumlich nah beieinander liegen. Eine solche lokale Anhäufung der Minireflektoren wird bei der Aufnahme der unmittelbar ableitbaren Messgrößen zusammengefasst und als ein Rohziel 61 bezeichnet. Ein Fahrzeug 6 bietet während der Annäherung an das FMCW-Radargerät 1 eine zunehmende Anzahl und während der Entfernung von dem FMCW-Radargerät eine abnehmende Anzahl an Rohzielen 61, die zur Bildung des vom Fahrzeug 6 ausgehenden Messsignals beitragen. Rohziele 61 entstehen beispielsweise häufig an hochreflektierenden Elementen wie Fahrzeugkennzeichen, Außenspiegeln oder Türgriffen der Fahrzeuge 6.

Das FMCW-Radargerät 1 kann in Bodennähe, z. B. in üblicher Höhe der Radachsen der Fahrzeuge 6, neben dem Fahrbahnrand 21, mit horizontal parallel zur Fahrbahnoberfläche 22 ausgerichteter Radarachse 12, positioniert werden. Der vertikale Winkel 15 ist dadurch mit 0° zur Fahrbahnoberfläche 22 eingestellt und braucht bei Berechnung der weiteren auswertbaren Merkmale nicht mehr berücksichtigt zu werden. In der Horizontalen 14 wird das FMCW-Radargerät 1 so zum Fahrbahnrand 21 ausgerichtet, dass der erste äußere Randstrahl 16 mit dem Fahrbahnrand 21 einen stumpfen Winkel δ von größer 95°, z. B. 120°, einschließt. Die Fahrzeuge 6 werden so bei der Einfahrt in die Radarkeule 9, erst nur durch Reflexionssignale von der Fahrzeugfront 63 kommend, erfasst. Später werden zunehmend Messsignale von der Fahrzeugflanke 64 erfasst, bis keine Messsignale mehr von der Fahrzeugfront 63, sondern nur noch von der Fahrzeugflanke 64 kommen. Noch später kommen zunehmend Messsignale vom Fahrzeugheck 65 hinzu, bis vor Erreichen der Haltelinie 23 nahezu nur noch Messsignale von dem Fahrzeugheck 65 empfangen werden.

Es ist auch möglich, das FMCW-Radargerät 1 in einer größeren Höhe gegenüber der Fahrbahnoberfläche 22 am Mast 3 anzubringen. Das hat den Vorteil, dass es zu weniger gegenseitigen Abschattungen der gleichzeitig durch die Radarkeule 9 fahrenden Fahrzeuge 6 kommt.

Anschließend wird eine Radarkeule 9 bildende Radarstrahlung 11 vom FMCW-Radargerät 1 ausgesendet und die von den Fahrzeugen 6 durch Reflexion erzeugten Messsignale zu mehreren Messzeitpunkten tₙ mit dem FMCW-Radargerät 1 erfasst.

Um einen ausreichenden Abstand zu einem prinzipbedingt miterfassten Grundrauschen zu den erfassten Messsignalen herzustellen und die Eindeutigkeit der Signalerfassung zu erhöhen, wird für die Signalintensität ein Schwellwert festgelegt, den das Messsignal überschreiten muss, um für eine weitere Signalverarbeitung verwendet zu werden.

Der Schwellwert kann grundsätzlich auch durch die technisch bedingte, nicht aktiv festlegbare Empfindlichkeitsgrenze des Radarsensors 7 vorgeben sein.

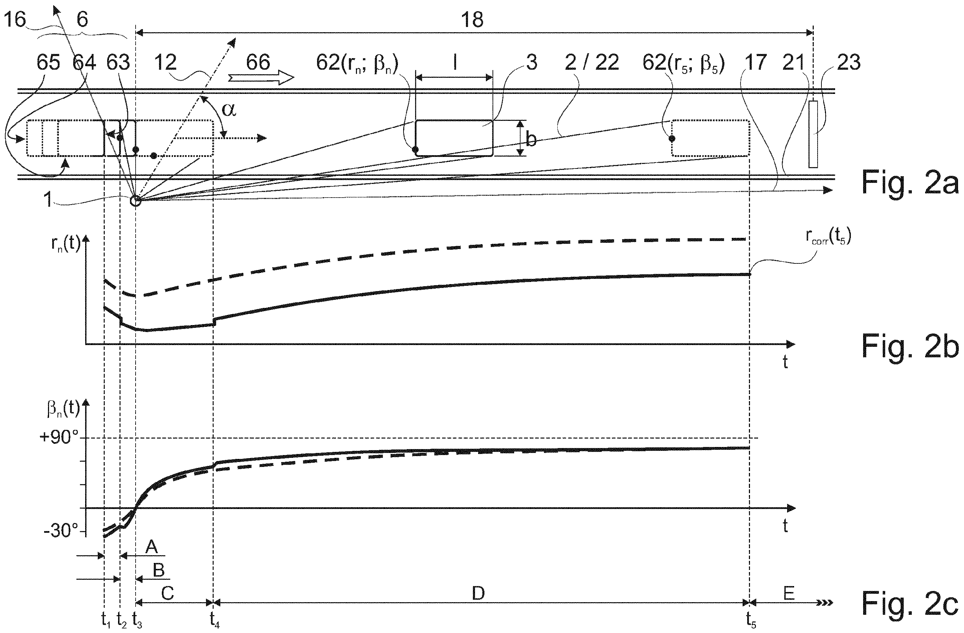

Wie in **Fig. 2a****,** auf die Darstellung von fünf Messzeitpunkten tₙ reduziert, erfolgt die Erfassung der Messsignale während der Durchfahrt des Fahrzeugs 6 durch die Radarkeule 9 zu mehreren Messzeitpunkten tₙ. Das Intervall zwischen den Messzeitpunkten tₙ kann dabei je nach erforderlicher Auflösung der Messung und den technischen Eigenschaften des FMCW-Radargeräts 1, insbesondere des Radarsensors 7 und der zugehörigen Signalverarbeitungseinheit 10 angepasst werden.

Aus den jeweils zu einem Messzeitpunkt tₙ erfassten Messsignalen werden jeweils eine Radialentfernung, ein Objektwinkel und eine Radialgeschwindigkeit (gemeinsam Messgrößen) für eine Vielzahl von Rohzielen 61 abgeleitet. Die Radialentfernungen und der Objektwinkel sind Positionsgrößen. Sie werden dann, soweit als möglich, unter Beachtung einer maximal möglichen Streuung der Messgrößen, für an einem Fahrzeug 6 mögliche Rohziele 61, als einem Fahrzeug 6 zugehörig abgespeichert. Da die Messwerte die Positionsgrößen der Rohziele 61 mit umfasst, kann eine eineindeutige Zuordnung zeitgleich zu mehreren die Radarkeule 9 durchfahrenden Fahrzeugen 6 erfolgen. Die Zuordnung kann anhand von Ähnlichkeiten der unmittelbar ableitbaren Messgrößen der Rohziele 61 erfolgen. Rohziele 61, die sich in der Radialgeschwindigkeit, der Radialentfernung und im Objektwinkel kaum unterscheiden, können mit einer hohen Wahrscheinlichkeit ein und demselben erfassten Fahrzeug 6 zugeordnet werden. Kann diese Zuordnung über mehrere Messzeitpunkte tₙ getätigt werden, so erhöht sich die Wahrscheinlichkeit exponentiell, sodass die Zuordnung bereits nach wenigen Intervallen eine hohe Zuverlässigkeit aufweist. Nachdem wenigstens einige der Messsignale zu mehreren Messzeitpunkten tₙ und damit wenigstens eine Teilmenge aus allen erfassten Rohzielen 61 eindeutig einem Fahrzeug 6 zugeordnet werden konnten, ist die Voraussetzung dafür geschaffen, das entsprechende Fahrzeug 6 auf seinem weiteren Weg durch die Radarkeule 9 zu verfolgen (Tracking) und weitere erfasste Rohziele 61 mit den, der Teilmenge entsprechenden Eigenschaften, ebenfalls diesem Fahrzeug 6 zuzuordnen.

Es werden aus den einem Fahrzeug 6 und einem Messzeitpunkt tₙ zugeordneten, abgeleiteten Radialentfernungen jeweils eine spezifische Positionsgröße 62, hier eine spezifische Radialentfernung rₙ, mit einer selben Rechenvorschrift gebildet. Als die eine Rechenvorschrift kommen verschiedene Rechenvorschriften in Frage.

Z. B. soll die spezifische Positionsgröße 62 zu jedem Messzeitpunkt tₙ aus dem arithmetischen Mittelwert aller Radialentfernungen oder aller Objektwinkel der von diesem Fahrzeug 6 erfassten Rohziele 61 bestimmt werden. Anstelle einer Rechenvorschrift zur Mittelwertbildung könnte auch mit einer anderen Rechenvorschrift die spezifische Positionsgröße 62 gebildet werden.

Die Bildung der spezifischen Radialentfernungen rₙ als spezifische Positionsgrößen 62 anhand von Radialentfernungen wird in der **Fig. 2a** verdeutlicht und in der weiteren Beschreibung des Verfahrensablaufes noch näher erläutert.

Mit der Bildung der spezifischen Positionsgrößen 62 wird das Fahrzeug 6 zu jedem Messzeitpunkt tₙ von der spezifischen Positionsgröße 62 verkörpert und kann während der Signalverarbeitung auf diese reduziert werden. Als die spezifischen Positionsgrößen 62 können dann, genau wie für die einzelnen Rohziele 61, die spezifische Radialentfernung rₙ und der spezifische Objektwinkel βₙ ermittelt und abgespeichert werden. Die zu den spezifischen Positionsgrößen 62 ermittelten Messgrößen können ebenfalls für die Berechnung der weiteren auswertbaren Merkmale (Fahrtrichtung und Fahrzeuggeschwindigkeit) des Fahrzeugs 6 verwendet werden.

Um die Fahrzeuglänge l zu bestimmen, kommt der Auswertung der spezifischen Positionsgrößen 62 eine erfindungswesentliche Bedeutung zu. Dazu erfolgt ein Abspeichern der während der Durchfahrt des Fahrzeugs 6 durch die Radarkeule 9 zu den Messzeitpunkten tₙ gebildeten spezifischen Positionsgrößen 62 als eine Funktion über die die Messzeitpunkte tₙ umfassende Messdauer. Es kann eine Funktion der spezifischen Radialentfernung rₙ(t) über die Zeit t und eine Funktion des spezifischen Objektwinkels βₙ(t) über die Zeit t gebildet und bewertet werden. Dabei werden im Verlauf der Funktionen zwei Änderungen festgestellt, die sich durch eine kurzzeitige Änderung des Anstieges in der Darstellung der Funktionen wiederspiegeln. Diese Änderungen finden statt, zum einen über die Dauer in der die Fahrzeugflanke 64 beginnt zu reflektieren, bis nur noch die Fahrzeugflanke 64 reflektiert und zum anderen über die Dauer in der das Fahrzeugheck 65 beginnt zu reflektieren, bis nur noch dieses reflektiert.

Der Verlauf der Funktionen ist zum besseren Verständnis nicht maßstabsgerecht und stark übertrieben in den **Fig. 2b** und **Fig. 2c** gezeigt. Wie bereits beschrieben wurde, wird die spezifische Positionsgröße 62 für einen Messzeitpunkt tₙ gemäß dem ersten Ausführungsbeispiel aus den Radialentfernungen aller zu diesem Messzeitpunkt tₙ erfassten Rohziele 61 des Fahrzeugs 6 gebildet. Je nach dem Fahrzeugwinkel a, den die Fahrspur des Fahrzeugs 6 beim Durchfahren der Radarkeule 9 gegenüber deren Radarachse 12 zu einem Messzeitpunkt tₙ einnimmt, ändern sich die erfassten Rohziele 61 ständig, das heißt, es werden zu den einzelnen Messzeitpunkten tₙ gleiche aber auch unterschiedliche Rohziele 61 erfasst, womit der Punkt, welchem die spezifische Positionsgröße 62, mit einer spezifischen Radialentfernung rₙ und einem spezifischen Objektwinkel βₙ, zugeordnet werden kann, kein Fixpunkt am Fahrzeug 6 ist, sondern dieser Punkt auf der Oberfläche des Fahrzeuges 6 wandert, was sich insbesondere beim Übergang an den Fahrzeugecken in einer erfassbaren Änderung der Funktion auswirkt. Die Funktionen lassen sich durch fünf Abschnitte beschreiben. Was anhand der **Fig. 2a** bis **Fig. 2c** erläutert wird.

Zur Vereinfachung soll bei der Darstellung und der Beschreibung vernachlässigt werden, dass das FMCW-Radargerät 1 keine Messsignale in Form von Dopplersignalen empfängt von Reflexionsflächen, deren Bewegung keine radiale Komponente gegenüber dem FMCW-Radargerät 1 aufweist (Todbereich des FMCW-Radargerätes 1). Die in den Fig. 2b und 2c dargestellten Strichlinien sollen den idealisierten Verlauf der Funktion zeigen, wenn das Fahrzeug 6 auf einen Punktreflektor reduziert wird. Der reale Verlauf der Funktion ist der Übersichtlichkeit halber nach unten versetzt dargestellt.

Zu einem Messzeitpunkt t₁ fährt das Fahrzeug 6 mit der linken vorderen Ecke der Fahrzeugfront 63 in den Radarkeulen 9 ein und es werden bis zum Zeitpunkt t₂ (Abschnitt A der Funktion) nur Oberflächen der Fahrzeugfront 63 von der Radarstrahlung 11 erfasst. Dementsprechend können auch die Rohziele 61 nur durch diese Oberflächen (z. B. das Nummernschild, der Kühlergrill, der das Führerhaus überragende Teil des Koffers) gebildet werden, womit die erfassten Radialentfernungen zu und zwischen diesen Messzeitpunkten (t₁ und t₂) und folglich die ermittelten spezifischen Radialentfernung (r₁ bis r2) nur durch den Ort der Fahrzeugfront 63 bestimmt sind. Da die Fahrzeugfront 63 senkrecht zur Fahrtrichtung 66 verläuft, wirkt das Fahrzeug 6 in diesem Bereich nahezu wie ein Punktreflektor.

Zwischen den Messzeitpunkten t₂ und t₃ (Abschnitt B der Funktion) befindet sich das Fahrzeug 6 bereits in einem solchen Objektwinkelbereich, dass neben den Oberflächen der Fahrzeugfront 63 auch Oberflächen der Fahrzeugflanke 64 von der Radarstrahlung 11 erfasst werden können. Es sei an dieser Stelle darauf hingewiesen, dass bei der Darstellung in **Fig. 2a** der Betrachtungswinkel um eine durch das FMCW-Radargerät 1 verlaufende, imaginäre Hochachse mit der Durchfahrt des Fahrzeugs 6 mitgedreht wird - vergleichbar mit dem Drehen des Kopfes, wenn man das Fahrzeug mit den Augen verfolgen will - um die Verteilung der Rohziele 61 besser sichtbar zu machen. Tatsächlich befindet sich das FMCW-Radargerät 1 und die von ihm ausgehende Radarstrahlung 11 während der gesamten Messdauer in einer unveränderten Position und Ausrichtung gegenüber der Fahrbahn 2. Durch das erste Erfassen von Rohzielen 61 der Fahrzeugflanke 64 kommen zu Bildung der spezifischen Radialentfernung rₙ Radialentfernungen hinzu, die zu einer nahezu sprungartigen geringfügigen Änderung der spezifische Radialentfernung rₙ führen und dem kurzzeitigen Abschnitt B indem die spezifische Radialentfernung rₙ geringfügig weniger schnell abnimmt.

Zwischen den Messzeitpunkten t₃ und t₄ (Abschnitt C) werden nur Oberflächen der Fahrzeugflanke 64 von der Radarstrahlung 11 erfasst. Die Wirkungen des Todbereiches vernachlässigend, wandert die spezifische Positionsgröße 62 auf der Fahrzeugflanke 64 in entgegengesetzter Richtung zur Fahrtrichtung 66 um eine halbe Fahrzeuglänge l, wodurch die Zunahme der spezifischen Radialentfernung rₙ kurzzeitig verlangsamt wird.

Zwischen den Messzeitpunkten t₄ und t₅ (Abschnitt D) kommen zunehmend Oberflächen des Fahrzeughecks 65 hinzu, welche die Radarstrahlung 11 reflektieren und somit zur Bildung der spezifischen Positionsgröße 62 beitragen.

Der Übergang zu einem Abschnitt E, in dem dann nur noch das Fahrzeugheck 65 reflektiert, ist fließend und nicht wirklich einem Zeitpunkt t₅, wie dargestellt, zuordenbar. Die Änderung der Funktion der spezifischen Positionsgröße 62, durch das Hinzukommen des Fahrzeughecks 65, ist aufgrund der bereits großen spezifischen Radialentfernung rₙ im Verhältnis zu deren Änderung minimal.

Im Vergleich hierzu ist die Änderung der spezifischen Radialentfernung rₙ beim Übergang der Reflexionen von der Fahrzeugfront 63 auf die Fahrzeugflanke 64 spürbar, da hier die spezifische Radialentfernung rₙ sehr gering und nicht breiter als die Fahrbahn 2 sein kann. Auch zum Zeitpunkt t₄ ist die spezifische Radialentfernung rₙ des Fahrzeuges 6 verhältnismäßig gering, weshalb auch hier eine Änderung der Funktion recht genau erfasst werden kann, die dadurch Zustande kommt, dass die reflektierende Fahrzeugflanke 64 als reflektierender Bereich in seiner Größe nahezu gleich bleibt und das Fahrzeugheck 65 hinzu kommt.

Zur Ermittlung der Fahrzeuglänge l kann gemäß dem ersten Ausführungsbeispiel mit Hilfe des beschriebenen Funktionsverlaufs, welcher die zeitliche Änderung der spezifischen Positionsgröße 62, hier der spezifischen Radialentfernung rₙ, beschreibt, auf die Zeitpunkte t₂ und t₄ geschlossen werden. In Kenntnis der Fahrzeuggeschwindigkeit wird die Fahrzeuglänge l ermittelt. Die Fahrzeuglänge l wird über die weitere Dauer der Durchfahrt des Fahrzeuges 6 durch die Radarkeule 9 zur spezifischen Radialentfernung rₙ addiert. Das Fahrzeug 6 befindet sich dann bereits in einer Entfernung zum FMCW-Radargerät 1 in dem der spezifische Objektwinkel βₙ sehr klein ist, sodass die spezifischen Radialentfernung rₙ nahezu einer Entfernung parallel zum Fahrbahnrand gemessen entspricht. Die Summe stellt eine korrigierte spezifische Radialentfernung r_{corr}dar.

Anstelle einer rechnerischen Ermittlung der Fahrzeuglänge l kann, mit Hilfe der sich über die Zeit ändernden spezifischen Radialentfernungen r_{n,}, kann auch ein Fahrzeugmodel für das Fahrzeug 6 moduliert werden, welches nach Normierung mit Hilfe der ermittelten Fahrzeuggeschwindigkeit mit vorhanden Vergleichsmodellen, deren Fahrzeuglänge bekannt ist, verglichen wird, um durch Zuordnung des modellierten Fahrzeugmodels zu dem ähnlichsten Vergleichsmodell die Fahrzeuglänge l abzuleiten. Da mit dem FMCW-Radargerät 1, nicht wie aus dem Stand der Technik bekannt, erst die Fahrzeugflanke 64 und dann zunehmend das Fahrzeugheck 65, sondern zuvor auch die Fahrzeugfront 63 erfasst wird, ist die Modulation eines Fahrzeugmodels genauer und erlaubt daher eine sicherere Zuordnung zu den Vergleichsmodellen.

Zur rechnerischen Ermittlung der Fahrzeuglänge l aber auch zur Ermittlung der Fahrzeuglänge l durch Vergleich mit vorhandenen Vergleichsmodellen, kann anstelle der spezifischen Radialgeschwindigkeit rₙ auch der spezifische Objektwinkel βₙ herangezogen werden.

Aus dem Funktionsverlauf der spezifischen Positionsgrößen 62, nämlich der spezifischen Radialgeschwindigkeit rₙ oder dem spezifischen Objektwinkel βₙ, kann ebenso auf die Fahrzeuglänge l auch die Fahrzeugbreite b ermittelt werden, indem auf den Messzeitpunkt t₁ des Eintretens der Fahrzeugfront 63 in die Radarkeule 9 und der Messzeitpunkt t₂, zu dem die Fahrzeugflanke 64 beginnt Radarstrahlung zu reflektieren, geschlossen wird.

Außerhalb der Grünphase einer Verkehrslichtsignalanlage 5, insbesondere innerhalb einer Rotphase wird dann in Kenntnis des horizontalen, senktrechten Abstandes der Haltelinie zum FMCW-Radargerät 19, der Fahrzeuggeschwindigkeit und der korrigierten spezifischen Radailentfernung r_{corr} berechnet, ob das Fahrzeug 6 die Haltelinie 23 überfahren wird oder nicht. Im Falle des Überfahrens kann die Kamera 4 z. B. vor dem Überfahren, während des Überfahrens und/oder auch nach dem Überfahren ausgelöst werden.

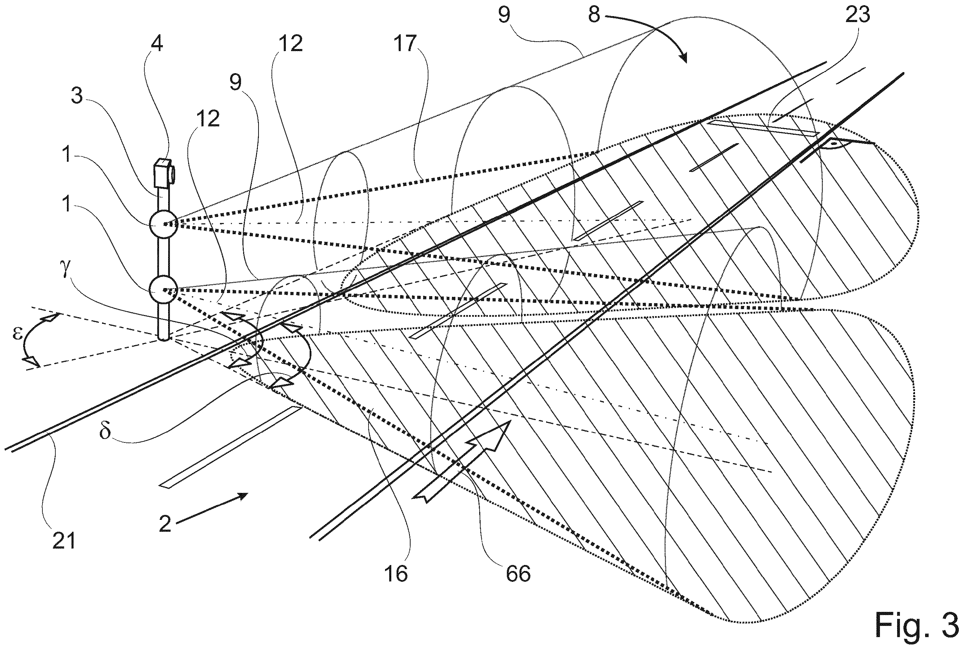

In einer weiteren Ausführung einer Vorrichtung soll anstelle eines FMCW-Radargerätes 1 mit nur einem Radarsensor 7, einem FMCW-Radargerät 1 mit mehreren, z. B. zwei, Radarsensoren 7 verwendet werden. Eine Prinzipskizze einer solchen Vorrichtung ist in **Fig. 3** gezeigt. Die Radarstrahlung 11 bildet hier mehrere Radarkeulen 9. Die Radarachsen 12 der Radarkeulen 9 sind dann jeweils horizontal um einen Winkelversatz ε zueinander verdreht, sodass die äußeren Randstrahlen 16, 17 durch Randstrahlen verschiedener Radarsensoren 7 gebildet werden. Die von den Radarsensoren 7 gebildeten Radarkeulen 9 können einander überlagern, womit ebenfalls, wie mit einem einzigen Radarsensor 7, der Beobachtungsraum 8 vollständig überdeckt wird. Der Vorteil besteht dann nur darin, dass anstelle eines Radarsensors 7 mit einem sehr großen Öffnungswinkel γ zwei Radarsensoren 7 mit einem nur hälftig großen Öffnungswinkel γ verwendet werden können.
Die Radarkeulen 9 müssen sich jedoch nicht überlappen, sondern können auch mit einem Abstand zueinander ausgerichtet sein, wobei sie für die Auswertung der Funktion der Positionsgrößen 62 nur relevante Bereiche (schraffierte Fahrbahnoberfläche in Fig.3) des Beobachtungsraumes 8, und diesen damit nur teilweise, abdecken. Auf diese Weise ist eine spürbare Energieersparnis möglich. Ein erster relevanter Bereich ist ein an den ersten äußeren Randstrahl 16 angrenzender Objektwinkelbereich, der so groß ist, dass er wenigstens zu einem Messzeitpunkt tₙ die vollständige Fahrzeugflanke 64 eines hindurchfahrenden Fahrzeuges 6 erfasst.
Ein zweiter relevanter Bereich ist ein an den zweiten äußeren Randstrahl 17 angrenzender Bereich, der die Haltelinie 23 und wenigstens zwei Fahrzeuglängen l umfasst.
Vorteilhaft sind das FMCW-Radargerät 1 und die Kamera 4 nahe zueinander angeordnet, bevorzugt an demselben Mast 3. Im Falle, dass das FMCW-Radargerät 1 mehr als einen Radarsensor 7 umfasst, können diese übereinander aber auch nebeneinander, oder beides zutreffend, zueinander angeordnet sein.

Das Verfahren und die Vorrichtung können auch verwendet werden, wenn bei gewünschter Heckanmessung und Aufnahme eines Fahrzeuges 6, bei Erwartung oder Feststellung eines Verkehrsverstoßes, von hinten und damit unbemerkt vom Fahrzeugführer, wenn der Verkehrsverstoß kein sogenannter Rotlichtverstoß in einem Ampelbereich ist. Z. B. kann erfasst werden, wenn ein Fahrzeug 6 in einen permanenten Sperrbereich einfährt oder eine Stopplinie ungebremst überfahrt.

### Bezugszeichenliste

- 1: FMCW-Radargerät
- 11: Radarstrahlung
- 12: Radarachse
- 13: horizontaler, senkrechter Aufstellabstand zum Fahrbahnrand
- 14: vertikaler, senkrechter Aufstellabstand zur Fahrbahnoberfläche
- 15: vertikaler Winkel der Radarachse zur Fahrbahnoberfläche
- 16: erster äußerer Randstrahl der Radarstrahlung
- 17: zweiter äußerer Randstrahl der Radarstrahlung
- 18: horizontaler, senkrechter Abstand der Haltelinie zum FMCW-Radargerät

- 2: Fahrbahn
- 21: Fahrbahnrand
- 22: Fahrbahnoberfläche
- 23: Haltelinie

- 3: Mast
- 4: Kamera
- 5: Verkehrslichtsignalanlage

- 6: Fahrzeug
- 61: Rohziel
- 62: spezifische Positionsgröße
- 63: Fahrzeugfront
- 64: Fahrzeugflanke
- 65: Fahrzeugheck
- 66: Fahrtrichtung

- 7: Radarsensor
- 8: Beobachtungsraum
- 9: Radarkeule
- 10: Signalverarbeitungseinheit
- tₙ: Messzeitpunkt
- rₙ: spezifische Radialentfernung
- r_{corr}: korrigierte spezifische Radialentfernung
- βₙ: spezifischer Objektwinkel
- γ: Öffnungswinkel
- δ: stumpfer Winkel
- α: Fahrzeugwinkel
- l: Fahrzeuglänge
- b: Fahrzeugbreite
- ε: Winkelversatz

- A: erster Abschnitt
- B: zweiter Abschnitt
- C: dritter Abschnitt
- D: vierter Abschnitt
- E: fünfter Abschnitt

## Patentansprüche

1. Verfahren zur Erfassung von Verkehrsverstößen durch Fahrzeuge (6) in einem Ampelbereich durch Heckanmessung der Fahrzeuge (6), bei dem während des Durchfahrens eines durch Radarstrahlung (11) überdeckten Beobachtungsraumes (8), zu mehreren Messzeitpunkten (tₙ), aus Messsignalen, die durch Reflexion von einem der Fahrzeuge (6) verursacht sind, jeweils eine messzeitpunktabhängige, spezifische Positionsgröße (62) sowie die Fahrzeuggeschwindigkeit des Fahrzeuges (6) abgeleitet werden und mit Hilfe der sich über die Durchfahrt ändernden spezifischen Positionsgröße (62) und der Fahrzeuggeschwindigkeit ermittelt wird, ob das Fahrzeug (6) außerhalb einer Grünphase einer Verkehrslichtsignalanlage (5) eine innerhalb des Beobachtungsraumes (8) liegende, der Verkehrslichtsignalanlage (5) zugeordneten Haltelinie (23) überfahren wird, um gegebenenfalls eine Kamera (4) zur Herstellung wenigstens eines Beweisfotos wenigstens einmal auszulösen, **dadurch gekennzeichnet, dass**
ein FMCW-Radargerät (1), mit wenigstens einem Radarsensor (7), welches Radarstrahlung (11) mit einem Öffnungswinkel (γ) zwischen zwei äußeren Randstrahlen (16, 17) aussendet und innerhalb einer Messdauer zu mehreren Messzeitpunkten (tₙ) eine Vielzahl von Messsignalen empfängt, wobei pro Messzeitpunkt (tₙ) eine Radialgeschwindigkeit und als spezifische Positionsgröße (62) eine spezifische Radialentfernung (rₙ) und ein spezifischer Objektwinkel (βₙ) ableitbar sind, neben einer Fahrbahn (2), mit einem Fahrbahnrand (21), so positioniert und ausgerichtet wird, dass der Beobachtungsraum (8) die Haltelinie (23) vollständig abdeckt und der erste der beiden Randstrahlen (16, 17) mit einem in Fahrtrichtung (66) verlaufenden Abschnitt des Fahrbahnrandes (21) einen horizontalen, stumpfen Winkel (δ) einschließt,
aus den spezifischen Positionsgrößen (62) die Fahrzeuglänge (l) abgeleitet und zu der spezifischen Radialentfernung (rₙ), welche mit Annäherung an die Haltelinie (23) zunehmend nur noch von der Position des Fahrzeughecks (65) des Fahrzeuges (6) bestimmt wird, addiert wird, indem die spezifischen Positionsgrößen (62) als Funktion über eine die Messzeitpunkte (tₙ) umfassende Messdauer abgespeichert werden, wobei die Funktion mehrere Abschnitte aufweist, in denen die Positionsgrößen (62) aus Messsignalen abgeleitet werden, die über einen ersten Abschnitt (A) durch Reflexion nur an der Fahrzeugfront (63), über einen zweiten Abschnitt (B) durch Reflexion an der Fahrzeugfront (63) und zunehmend an einer Fahrzeugflanke (64), über einen dritten Abschnitt (C) nur an der Fahrzeugflanke (64), über einen vierten Abschnitt (D) an der Fahrzeugflanke (64) und dem Fahrzeugheck (65) und über einen fünften Abschnitt (E) nur an dem Fahrzeugheck (65) verursacht werden, die Übergänge zwischen dem zweiten Abschnitt (B) und dem dritten Abschnitt (C) sowie dem dritten Abschnitt (C) und dem vierten Abschnitt (D) erfasst werden, die Länge des dritten Abschnittes (C) bestimmt wird und aus der Länge des dritten Abschnittes (C) mit Hilfe der ermittelten Fahrzeuggeschwindigkeit die Fahrzeuglänge (l) des Fahrzeuges (6) berechnet wird und
eine so gebildete korrigierte spezifische Radialentfernung (r_{corr}) zur Ermittlung der Überfahrt der Haltlinie (23) verwendet wird, womit die Überfahrt der Fahrzeugfront (63) des Fahrzeuges (6) prognostiziert wird.

2. Verfahren nach Anspruch 1, **dadurch gekennzeichnet,**
**dass** aus den spezifischen Positionsgrößen (62) ein Fahrzeugmodel moduliert wird, welches nach Normierung mit Hilfe der ermittelten Fahrzeuggeschwindigkeit mit vorhandenen Vergleichsmodellen, deren Fahrzeuglänge bekannt ist, verglichen wird und durch Zuordnung des modellierten Fahrzeugmodels zu dem ähnlichsten Vergleichsmodel wird die Fahrzeuglänge (l) abgeleitet.

3. Verfahren nach Anspruch 1, **dadurch gekennzeichnet,**
**dass** die spezifische Positionsgröße (62) pro Messzeitpunkt (tₙ) durch Berechnung eines spezifischen Wertes der diesem Messzeitpunkt zugeordneten Radialentfernungen (rₙ) gebildet wird.

4. Verfahren nach Anspruch 1, **dadurch gekennzeichnet,**
**dass** die spezifische Positionsgröße (62) pro Messzeitpunkt (tₙ) durch Berechnung eines spezifischen Wertes der diesem Messzeitpunkt (tₙ) zugeordneten Objektwinkel (βₙ) gebildet wird.

5. Verfahren nach Anspruch 3 oder 4, **dadurch gekennzeichnet,**
**dass** der spezifische Wert den arithmetischen Mittelwert darstellt.

## Claims

1. Method for capturing traffic offences by vehicles (6) in a traffic light region by measuring the tails of the vehicles (6), wherein, while passing through an observation space (8) covered by radar radiation (11), at a plurality of measurement times (tₙ), respectively one measurement-time-dependent, specific position variable (62) and the vehicle speed of the vehicle (6) are derived from measurement signals that are caused by a reflection at one of the vehicles (6) and the specific position variable (62) that changes during the passage and the vehicle speed assist in establishing whether the vehicle (6), outside of a green phase of a traffic light installation (5), has driven over a stop line (23) that is assigned to the traffic light installation (5) and lies within the observation space (8) in order, where necessary, to trigger a camera (4) at least once for the purposes of producing at least one evidence photo,
**characterized in that**
a FMCW radar device (1) having at least one radar sensor (7), which emits radar radiation (11) with an aperture angle (γ) between two outer marginal rays (16, 17) and which receives a multiplicity of measurement signals at a plurality of measurement times (tₙ) within a measurement duration, wherein a radial speed and, as specific position variables (62), a specific radial distance (rₙ) and a specific object angle (β_{η}) are derivable at each measurement time (tₙ), is positioned and aligned next to a roadway (2) with a roadway edge (21) in such a way that the observation space (8) completely covers the stop line (23) and the first of the two marginal rays (16, 17) includes a horizontal, obtuse angle (δ) with a portion of the roadway edge (21) extending in the direction of travel (66),
the vehicle length (1) is derived from the specific position variables (62) and said vehicle length is added to the specific radial distance (rₙ), which, when approaching the stop line (23), is increasingly only still determined from the position of the vehicle tail (65) of the vehicle (6), by virtue of the specific position variables (62) being stored as a function over a measurement duration comprising the measurement times (tₙ), wherein the function has a plurality of portions during which the position variables (62) are derived from measurement signals which during a first portion (A) are caused by reflection only at the vehicle front (63), during a second portion (B) are caused by reflection at a vehicle front (63) and increasingly at a vehicle flank (63), during a third portion (C) are caused only at the vehicle flank (64), during a fourth portion (D) are caused at the vehicle flank (64) and the vehicle tail (65) and during the fifth portion (E) are caused only at the vehicle tail (65), the transitions between the second portion (B) and third portion (C) and between the third portion (C) and the fourth portion (D) being captured, the length of the third portion (C) being determined and the vehicle length (l) of the vehicle (6) being calculated from the length of third portion (C) with the aid of the established vehicle speed, and
a corrected specific radial distance (r_{corr}) formed thus is used to establish the stop line (23) being crossed, by means of which the crossing by the vehicle front (63) of the vehicle (6) is predicted.

2. Method according to Claim 1, **characterized in that** a vehicle model is modulated from the specific position variables (62), said vehicle model being compared after the normalization with the aid of the established vehicle speed to available comparison models, the vehicle length of which is known, and the vehicle length (l) is derived by assigning the modelled vehicle model to the most similar comparison model.

3. Method according to Claim 1, **characterized in that** the specific position variable (62) at each measurement time (tₙ) is formed by calculating a specific value of the radial distances (rₙ) assigned to this measurement time.

4. Method according to Claim 1, **characterized in that** the specific position variable (62) at each measurement time (tₙ) is formed by calculating a specific value of the object angle (βₙ) assigned to this measurement time (tₙ).

5. Method according to Claim 3 or 4, **characterized in that** the specific value represents the arithmetic mean.

## Revendications

1. Procédé de détection d'infractions routières commises par des véhicules (6) dans une zone de feux de signalisation par mesure de l'arrière des véhicules (6), dans lequel, lors du passage dans un espace d'observation (8) couvert par un rayonnement radar (11), une grandeur de position spécifique (62) dépendant de l'instant de mesure ainsi que la vitesse du véhicule (6) sont dérivées à plusieurs instants de mesure (tₙ) à partir de signaux de mesure qui sont provoqués par réflexion sur l'un des véhicules (6), et il est déterminé, à l'aide de la grandeur de position spécifique (62), qui varie au cours dudit passage, et de la vitesse du véhicule, si, à l'extérieur d'une phase verte d'un système de feux de signalisation (5), le véhicule (6) a franchi une ligne d'arrêt (23) située à l'intérieur de l'espace d'observation (8) et associée au système de feux de signalisation (5) pour déclencher, le cas échéant, une caméra (4) au moins une fois afin de produire au moins une photographie de preuve,
**caractérisé en ce qu'**un appareil radar FMCW (1), comportant au moins un capteur radar (7) qui émet un rayonnement radar (11) ayant un angle d'ouverture (γ) entre deux faisceaux de bord extérieurs (16, 17) et qui reçoit plusieurs signaux de mesure au cours d'une période de mesure à plusieurs instants de mesure (tₙ), étant entendu que, pour chaque instant de mesure (tₙ), une vitesse radiale et, en tant que grandeur de position spécifique (62), une distance radiale spécifique (rₙ) et un angle d'objet spécifique (βₙ) peuvent être dérivés, est positionné et orienté au bord d'une voie de circulation routière (2) présentant un bord de voie de circulation (21), de telle sorte que l'espace d'observation (8) couvre entièrement la ligne d'arrêt (23) et que le premier des deux faisceaux de bord (16, 17) définit un angle obus horizontal (δ) avec une section du bord de voie de circulation (21) s'étendant dans la direction de déplacement (66),
la longueur de véhicule (l) est dérivée des grandeurs de position spécifiques (62) et additionnée à la distance radiale spécifique (rₙ), qui n'est de plus déterminée que par la position de l'arrière de véhicule (65) du véhicule (6) à l'approche de la ligne d'arrêt (23), en mémorisant les grandeurs de position spécifiques (62) sous la forme d'une fonction au cours d'une période de mesure comprenant les instants de mesure (tₙ), dans lequel ladite fonction comporte plusieurs sections dans lesquelles les grandeurs de position (62) sont dérivées de signaux de mesure qui sont provoqués dans une première section (A) par réflexion uniquement sur l'avant de véhicule (63), dans une deuxième section (B) par réflexion sur l'avant du véhicule (63) et de plus, sur un flanc de véhicule (64), dans une troisième section (C) uniquement sur le flanc de véhicule (64), dans une quatrième section (D) sur le flanc de véhicule (64) et sur l'arrière de véhicule (65) et dans une cinquième section (E) uniquement sur l'arrière de véhicule (65), les transitions entre la deuxième section (B) et la troisième section (C) ainsi qu'entre la troisième section (C) et la quatrième section (D) sont détectées, la longueur de la troisième section (C) est déterminée et la longueur de véhicule (l) du véhicule (6) est calculée à partir de la longueur de la troisième section (C) à l'aide de la vitesse déterminée du véhicule et
une distance radiale spécifique corrigée (r_{corr}) ainsi obtenue est utilisée pour déterminer le franchissement de la ligne d'arrêt (23), cela permettant de prédire le passage de l'avant de véhicule (63) du véhicule (6).

2. Procédé selon la revendication 1,
**caractérisé en ce qu'**un modèle de véhicule est modulé à partir des grandeurs de position spécifiques (62), lequel modèle est comparé, après normalisation par la vitesse de véhicule déterminée, à des modèles comparatifs existants dont la longueur de véhicule est connue et la longueur de véhicule (1) est dérivée par association du modèle de véhicule modélisé au modèle comparatif le plus ressemblant.

3. Procédé selon la revendication 1,
**caractérisé en ce que** la grandeur de position spécifique (62) est obtenue à chaque instant de mesure (tₙ) par calcul d'une valeur spécifique des distances radiales (rₙ) associées audit instant de mesure.

4. Procédé selon la revendication 1,
**caractérisé en ce que** la grandeur de position spécifique (62) est obtenue à chaque instant de mesure (tₙ) par calcul d'une valeur spécifique des angles d'objet (βₙ) associés audit instant de mesure (tₙ).

5. Procédé selon la revendication 3 ou 4,
**caractérisé en ce que** la valeur spécifique représente la moyenne arithmétique.
